# EUROPEAN PATENT SPECIFICATION

(11) **EP 1 133 724 B1**
(45) Date of publication and mention of the grant of the patent: **26.03.2003**
(21) Application number: 99947618.7
(22) Date of filing: 17.09.1999
(51) Int. Cl.: G06F 9/30, G06F 9/318

(54) **MICROPROCESSOR**
MIKROPROZESSOR
MICROPROCESSEUR

(30) Priority: 13.10.1998 GB 9822191
(43) Date of publication of application: 19.09.2001
(73) Proprietor: Digital Communication Technologies Ltd., Kingston, Surrey KT2 5AA (GB)
(72) Inventor: KUBICZEK, Maciej, Hampton, Middlesex TW12 2RE (GB); TURNER, Christopher, Robert, Hampton, Middlesex TW12 2RE (GB)
(74) Representative: Lind, Robert
(86) International application number: GB9903100
(87) International publication number: WO00022507

(56) References cited:
- EP-A- 0 279 953
- WO-A-99/31579
- US-A- 5 479 621
- US-A- 5 752 073
- ROGERS: "Emulation instruction" IBM TECHNICAL DISCLOSURE BULLETIN,US,IBM CORP. NEW YORK, vol. 25, no. 11A, page 5576-5577-5577 XP002112146 ISSN: 0018-8689
- "REAL-TIME CISC ARCHTECTURE HW EMULATOR ON A RISC PROCESSOR" IBM TECHNICAL DISCLOSURE BULLETIN,US,IBM CORP. NEW YORK, vol. 37, no. 3, page 605 XP000441601 ISSN: 0018-8689

## Description

The present invention relates to a simplified instruction set microprocessor. More particularly, though not necessarily, the invention relates to a microprocessor which may be used to implement a version of the Java Virtual Machine.

High level language oriented computer architectures have been known for many years, but until now few of them have been successful commercially. Currently, the most popular computer architectures are either general-purpose Complex Instruction Set Computers (CISC) such as the Intel 80x86 family of microprocessors, or general-purpose Reduced Instruction Set Computers (RISC).

The success of the Java programming language, and the demands which the Java environment places on an execution platform, may change this situation. This means that language specific architectures may in the future become more popular as a Java-oriented architecture is likely to be more efficient in executing Java than a general-purpose microprocessor.

Java is a young technology and has been designed to run on a variety of computing platforms, but the benefits of using dedicated special-purpose architectures have been apparent from the outset. SUN Microsystems™, the originators of Java, have developed a microprocessor core called picoJava™. This core is targeted toward the high-end of the computer market, i.e. it is intended for use in large desktop computer type applications. picoJava™ is large, complex and power-hungry, making it unsuitable for smaller, embedded types of applications.

Certain similarities between the Java Virtual Machine and the Forth programming language have led manufacturers of Forth chips to re-brand their chips as Java chips. While some Forth chips are better at implementing Java than other general-purpose microprocessors, differences between the Java Virtual Machine and Forth ensure that a dedicated Java microprocessor will generally outperform a Forth microprocessor.

Embedded systems often operate under stringent real-time constraints. In particular, the interrupt latency of a processor is a critical parameter. With complex microcoded instructions, interrupt latency can be on the order of several dozen or even hundreds of clock cycles.

US5,479,621 describes a microprocessor for executing FORTH instructions which have a length of 16 or 32 bits. Instructions which require a subroutine call contain the start address of the memory location where the subroutine is stored.

It is an object of the present invention to provide a high-performance, virtual machine tailored microprocessor with a reduced transistor count compared to other processors, such as existing Java processors.

It is also an object of this invention to provide a high-performance microprocessor, which has the low interrupt latency necessary in many real-time embedded systems.

It is a further object of the invention to provide extremely good code density for high-level language generated programs.

It is a further object of the invention to simplify the translation process from a machine independent bytecode representation of a program, such as the-Java Virtual Machine bytecodes, to the microprocessor's instruction set, so that "on the fly" application program loaders, such as the Java class loaders, can be implemented at minimal cost.

It is a further object of the invention to provide a means for the microprocessor to communicate with other microprocessors via a local area network, and to enable software upgrades to be performed remotely over the network.

It is a further object of the invention to provide the means for the microprocessor to interface directly to a dedicated slave co-processor (such as a numeric co-processor, a digital signal processor (DSP), a special purpose communication processor, etc.) so that special purpose systems can be easily implemented.

According to a first aspect of the present invention there is provided a microprocessor system for executing Virtual Machine bytecodes which have been translated into respective 8-bit microprocessor instructions which correspond either to a fixed and predefined operation or to a user defined operation, the system comprising:
a central processing unit;
an instruction memory (100) for storing the sequence of 8-bit microprocessor instructions;
means (101) for fetching each stored instruction in turn and for analysing each instruction to determine whether an instruction corresponds either to a fixed and predefined operation or to a user defined operation;
means (151) for generating an address corresponding to the location of a subroutine if an instruction corresponds to a user defined operation,
wherein, in the event that an instruction corresponds to a fixed and predefined operation, the instruction is passed to the central processing unit for execution and, in the event that an instruction corresponds to a user defined operation, a subroutine corresponding to the instruction is called using the generated address.

Preferably, instructions corresponding to fixed and predefined operations are distinguished from instructions corresponding to user defined operations by a bit in a predefined bit position of the instruction code. Thus, the means for analysing each stored instruction is arranged to check for the presence of a bit in that bit position.

Preferably, the microprocessor system comprises a data memory arranged in use to store code defining said subroutines. More preferably, the system comprises means for generating an address corresponding to the location of a subroutine if an instruction corresponds to user defined operations. Where said distinguishing bit is the most significant bit of the instruction code, this means is arranged to shift the code to the left by one or more bits. Preferably, the microprocessor comprises a program counter register which is arranged to load the bit shifted instruction.

Preferably, the microprocessor system comprises a hardware stack arranged in use to store a return address when a subroutine is entered, the return address pointing to the next instruction in the instruction memory when execution of the subroutine is completed.

Preferably, the central processing unit, instruction memory, data memory, hardware stack, and program counter are all coupled to a common bus. More preferably, all of these components including the bus are integrated onto a single chip.

Preferably, the data memory is arranged to hold 32-bit data values.

Preferably, the central processing unit contains an arithmetic logic unit and a data stack. The top two elements of the data stack are connected to the inputs of the arithmetic logic unit and the output of the arithmetic logic unit is connected to an internal data bus.

Preferably, the top three elements of the data stack contain special-purpose circuits, which enable the efficient (single cycle) execution of seven primitive stack operations directly in hardware. The remaining data stack elements are simple shift registers.

Preferably, the microprocessor system has a means for recognising a "fast-return" instruction "folded" with a regular instruction, by utilising circuitry which decodes the "fast call" bit in the 8-bit bytecode and another dedicated bit (or bits) in the 8-bit bytecode.
More preferably, this other bit (or bits) is (are) the second (and subsequent) most significant bit(s) in the 8-bit bytecode.

Preferably, the microprocessor contains a dedicated register called the *Parameter Pool Pointer,* together with associated circuitry and several dedicated instructions for storing and accessing 32-bit quantities in data memory using short (8-bit or 16-bit) offsets. This mechanism allows the efficient implementation of local (dynamic) variables in block and object oriented languages.

Preferably, the microprocessor contains a dedicated register called the *Global Constant Pool Pointer,* together with associated circuitry and dedicated instructions for storing and accessing 32-bit quantities in data memory using short (8-bit or 16-bit) offsets. This mechanism allows the efficient implementation of 32-bit literal constants, which are global to all execution contexts, using only an 8-bit or 16-bit bytecode extension.

Preferably, the microprocessor contains a dedicated register called the *Local Constant Pool Pointer,* together with associated circuitry and dedicated instructions for storing and accessing 32-bit quantities in data memory using short (8-bit or 16-bit) offsets. This allows the efficient implementation of 32-bit literal constants, which are local to a particular execution context.

Preferably, the microprocessor contains a dedicated register called the *Extension Stack Pointer*, together with dedicated circuits, which is used to spill data stack elements into data memory, and to refill the data stack from data memory.

Preferably, the microprocessor contains dedicated circuitry, to efficiently implement a subroutine call via an in-memory jump table, which is essential for an efficient implementation of dynamic method dispatch in object oriented programming languages. In a preferred embodiment of this invention this language would be the Java programming language.

Preferably, the microprocessor contains dedicated circuitry and instruction to improve the efficiency of exception handlers.

Preferably, the microprocessor contains dedicated hardware mechanisms to allow the efficient implementation of a variety of garbage-collection algorithms, which are essential in many object-oriented systems, such as Java.

Preferably, the microprocessor contains circuits for interfacing the microprocessor to a data network and to allow the microprocessor's software to be dynamically upgraded over that network.

Preferably, the microprocessor contains a means for communicating with a special-purpose co-processor, such as a DSP processor or a math processor. The co-processor can be integrated on the same silicon die as the microprocessor, or can be located off-chip.

For a better understanding of the present invention and in order to show how the same may be carried into effect reference will now be made, by way of example, to the accompanying drawings, in which:
Figure 1 illustrates schematically a microprocessor system;
Figure 2 illustrates schematically a fast subroutine call mechanism of the system of Figure 1;
Figure 3 illustrates schematically the folding of a subroutine return operation in the system of Figure 1;
Figure 4 illustrates schematically immediate operand decode logic of the system of Figure 1; and
Figure 5 illustrates schematically a data stack of the system of Figure 1.

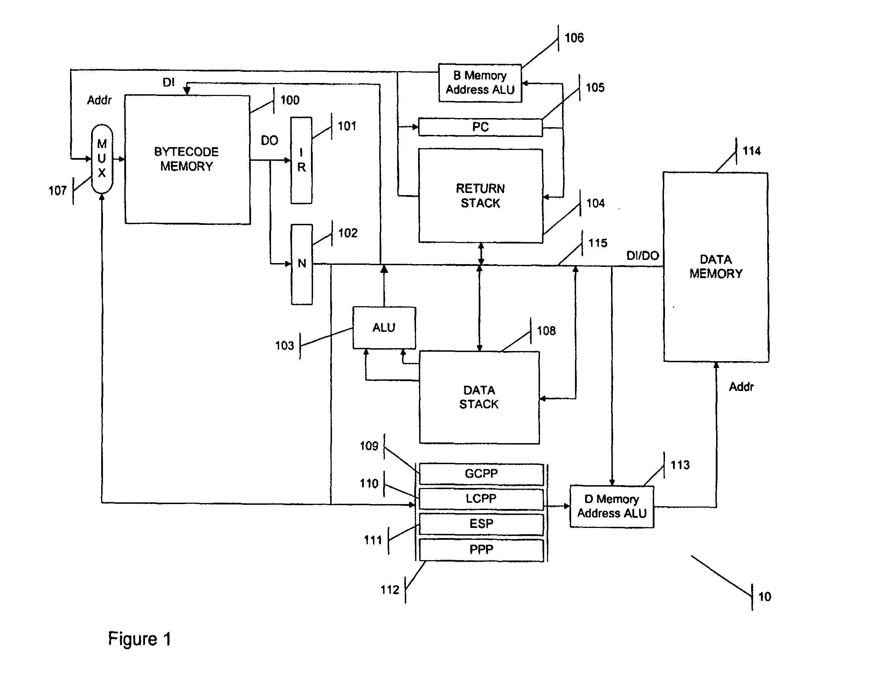

Figure 1 shows a block diagram of a microprocessor 10. It is seen that the microprocessor 10 has a simple architecture. The central processing unit is connected to two memories: an 8-bit wide Bytecode Memory 100 and a 32-bit wide Data Memory 114. The CPU contains a main Arithmetic Logic Unit 103 and two hardware stacks: the Return Stack 104 and the Data Stack 108. The top two elements of the Data Stack 108 are connected directly to the inputs of the ALU 103. The CPU also contains an 8-bit Instruction Register 101 for latching the currently executing instruction bytecode, and an Immediate Operand circuit 102 which connects the output of the Bytecode Memory to the CPU's Internal Data Bus 115. The CPU also contains a Program Counter register 105, which is connected to the input of the Bytecode Memory Address ALU 106 and also to the input and output ports of the Return Stack 104. In addition to the above, the CPU also contains four dedicated address registers, namely the Global Constant Pool Pointer 109, the Local Constant Pool Pointer 110, the Extension Stack Pointer 111, and the Parameter Pool Pointer 112. The read ports of the address registers are connected to the input of the Data Memory Address ALU 113.

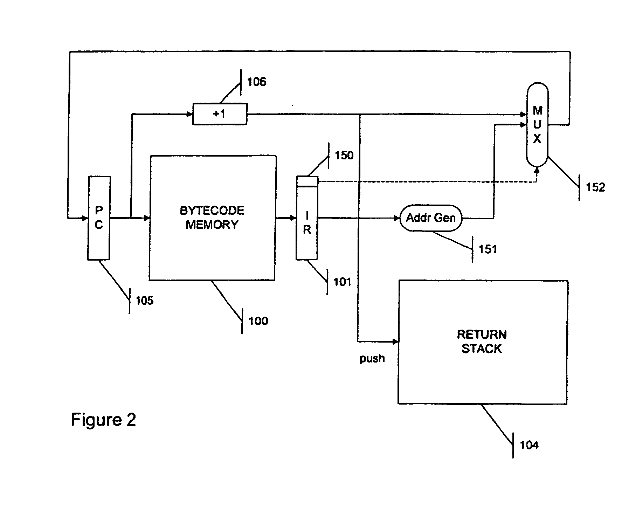

Figure 2 shows a block diagram of the fast subroutine call mechanism. The microprocessor instruction fetch logic includes a circuit which distinguishes a bit 150 (the most significant bit in a preferred embodiment of the invention) in the 8-bit instruction register 101 which latches a bytecode fetched from a bytecode memory 100. If the bit 150 is active, the microprocessor program counter is loaded with the output of the Address Generator circuit 151 which uses the remaining 7 bits of the bytecode to produce an address. In a preferred embodiment of the invention, the circuit 151 shifts the low 7 bits left by two bits. The program counter register load is determined by the control signal on gate 152. At the same time, the current value of the program counter 105 is stored in the on-chip return stack 104. This sequence of actions is performed in a single clock cycle, and is equivalent to a fast subroutine call to one of 128 possible locations.

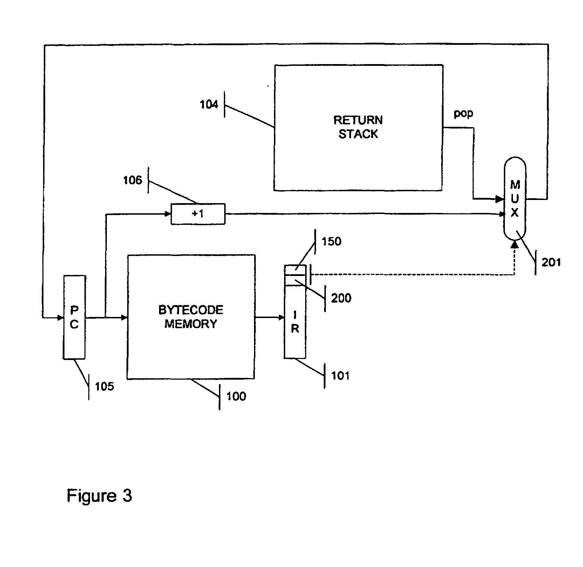

Figure 3 shows the block diagram of the circuit implementing the folding of a subroutine return operation with a regular instruction. The microprocessor instruction decode logic includes a circuit which tests two bits 150, 200 in the 8-bit instruction register 101 which latches a bytecode fetched from bytecode memory, and controls a circuit 201, which reloads the program counter register from the top of the return stack. In a preferred embodiment of the invention the two bits would be the two most significant bits in the 8-bit bytecode. This action is performed in parallel with normal instruction execution, and means that any (regular) instruction of the microprocessor can be "folded" with a return from subroutine operation, effectively providing a zero-overhead operation.

The fast call/fast return features of the microprocessor allow very short instruction sequences to be encoded as 8-bit user-defined bytecodes. This feature is a key to providing good code density and also good interrupt latency, since the "macro" instructions are composed of a sequence of simple (RISC-like) machine instructions of the microprocessor, and can be interrupted without problems.

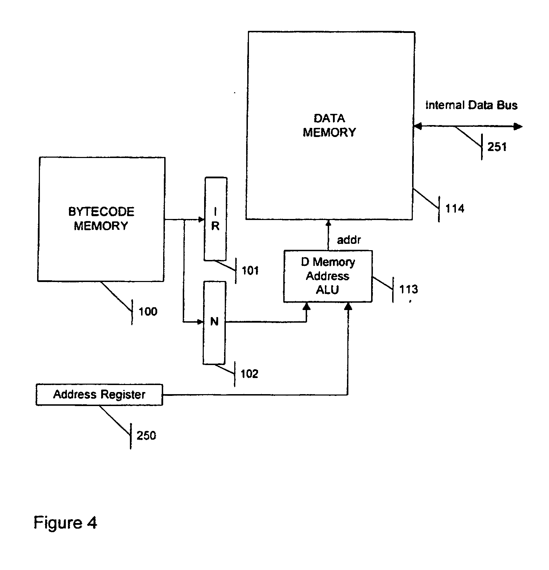

The instruction fetch logic of the microprocessor includes a circuit, shown in Figure 4, which allows a bytecode to be followed by a single 8-bit immediate value. This immediate value is read from bytecode memory 100 and latched in the immediate operand module 102. Depending on the bytecode, this 8-bit value can be combined with one of the address registers 109, 110, 111, 112, shown in Figure 4 as reference numeral 250, to provide an address into data memory, from which a full 32-bit immediate value is fetched.

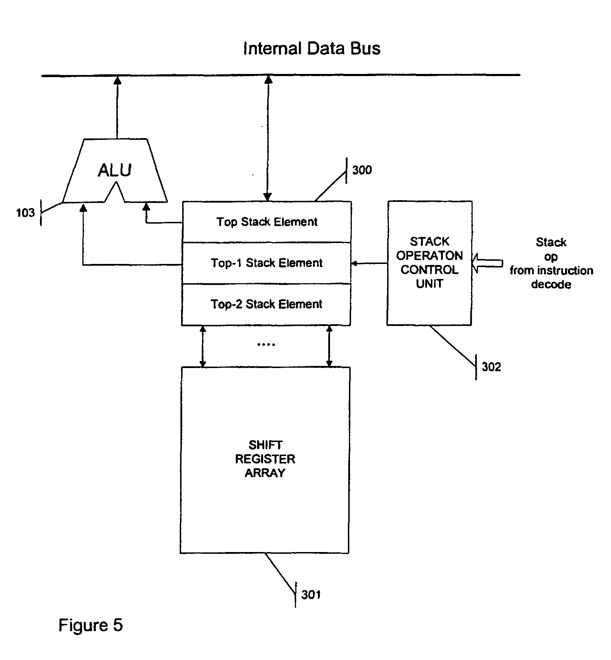

The organisation of the Data Stack is shown in Figure 5. The top three data stack entries 300 are different from the remaining stack entries 301 and are provided with special-purpose circuits, which enable them to execute seven primitive stack manipulation operations directly in hardware in one clock cycle. The top two elements of the Data Stack are connected to the inputs of the microprocessor's Arithmetic Logic Unit 103. The stack manipulation primitives have been selected to either directly correspond to some Java Virtual Machine stack manipulation instructions, and to allow the composition of the remaining Java Virtual Machine instructions from two or three primitives. The primitive operations are:
- POP Remove the top stack element
- DUP Duplicate the top stack element
- OVER Copy the second stack element over the top stack element
- SWAP Swap the top two stack elements
- LROT Rotate the top 3 stack elements left
- RROT Rotate the top 3 stack elements right
- TOVER Copy the third stack element over the top stack element

The remaining Data Stack elements 301 are implemented as a simple array of 32 by n shift registers.

Object-oriented languages, such as Java, require the efficient implementation of local (or dynamic) variables. The microprocessor here described supports the concept of a *Parameter Pool.* A parameter pool is an area of data (32-bit) memory, with individually addressable locations. The addresses of the individual locations are small positive integers.

The Parameter Pool is implemented using a dedicated pointer register called the *Parameter Pool Pointer* register. Hardware mechanisms are provided for transferring data from the data stack to the Parameter Pool, and for accessing and storing individual elements in the pool using either a short (8-bit) offset in the bytecode stream, or a 32-bit offset from the top of the data stack.

A 32-bit architecture requires 32-bit literal constant operands to be included in the instruction set. Current practice in bytecoded architectures is to embed the literal constant in the bytecode stream. This increases the code size, and makes the instruction decoding circuits more complex. The approach taken with the present microprocessor is the provision of *constant pools,* which hold the values of the literal constants. Two pools are provided for each execution context. A *Global Constant Pool* contains literal constants common to all execution contexts (the most commonly occurring constants, plus constants for the operation of the virtual machine). A *Local Constant Pool* contains literal constants specific to a particular execution context. The constant pools are implemented using two dedicated pointer registers: *the Global Constant Pool Pointer* register and the *Local Constant Pool Pointer* register. Hardware mechanisms are provided to enable the initialisation of the constant pools and the efficient retrieval of any constant from the pools using an 8-bit offset in the bytecode stream, or a 32-bit offset from the top of data stack.

The on-chip data stack is used for expression evaluation. In a preferred embodiment of the invention the depth is equal to 8, which is adequate for most situations. The (relatively) shallow depth of the data stack makes context switching faster, since in the case in question only at most 8 elements need to be spilled into memory. In some cases, the number of elements on the data stack may exceed 8, causing stack overflow. To deal with this situation a dedicated register, called the *Extension Stack Pointer* is provided, together with dedicated circuits for loading/storing the bottom element of the data stack in data memory, according to the address stored in the Extension Stack Pointer.

Object oriented languages use dynamic method dispatch very extensively. The present microprocessor implements dynamic method dispatch using subroutine calls via a jump table. This operation is performed using a built-in instruction of the microprocessor.

Many modern programming languages, such as Java, include facilities for defining exception handlers. The present microprocessor has instructions and dedicated circuits to improve the efficiency of the implementation of exception handlers.

Modern high-level programming languages, such as Java, use sophisticated memory management techniques based on garbage collection. The present microprocessor contains circuits, which allow the efficient implementation of a variety of garbage collection algorithms, for different application areas.

Since the "semantic gap" between the microprocessor here described and typical stack-based virtual machine architectures is small, it is possible to implement very simple dynamic loaders, which allow machine-independent application code (such as software upgrades) for the microprocessor to be downloaded over a local data network. In a preferred embodiment of the invention, the machine-independent code would be the Java class file format. For this reason, the microprocessor contains a unit for connecting the processor to a local area network.

Many modern embedded systems consist of a control module and a data-processing module. The control module is usually implemented by a general-purpose microprocessor, while the data processing part is implemented by a dedicated hardware processor. Depending on the application area, the dedicated hardware processor can be a digital signal processing (DSP) processor, or a special-purpose math co-processor. To allow the present microprocessor to be used in such situations, special purpose instructions have been provided in the microprocessor, together with dedicated circuitry enabling the processor to directly interface to a wide variety of special-purpose co-processors.

The microprocessor described above has the following important distinguishing features:
- Low transistor count and low power dissipation for use in small embedded systems
- Unique two-level architecture involving a fast *micro machine* and a slower *macro machine*
- Modified Harvard architecture with an 8-bit wide *bytecode memory* and a 32-bit wide *data memory.*
- Bytecode (0-operand) instruction set for maximum code density.
- 32-bit internal architecture.
- A 32-bit wide hardware operand stack coupled to the ALU, with automatic fill/spill unit.
- A 32-bit wide hardware return (subroutine) stack, with automatic fill/spill unit.
- RISC-like instruction set, with most instructions executing in a single cycle.
- Zero-overhead subroutine return instruction which can be "folded" with other instructions.
- 128 user-programmable bytecodes facilitating the efficient creation of virtual machines.
- Hardware support for the efficient execution of high-level languages, such as Java.
- Global and local constant pools, allowing the specification of 32-bit immediate constants using short offsets in the bytecode stream.
- Parameter pool, allowing the efficient implementation of local variables.
- Hardware and instructions for dynamic method dispatch
- Hardware and instructions for the efficient implementation of software exceptions
- Hardware support for garbage collection algorithms
- Interface to a local area network for dynamic upgrading of the application software
- Hardware interface to a variety of on- and off-chip co-processors

It will be appreciated by the person of skill in the art that various modifications may be made to the above described embodiments without departing from the scope of the present invention as claimed.

## Claims

1. A microprocessor system for executing Virtual Machine bytecodes which have been translated into respective 8-bit microprocessor instructions which correspond either to a fixed and predefined operation or to a user defined operation, the system comprising:
a central processing unit;
an instruction memory (100) for storing the sequence of 8-bit microprocessor instructions;
means (101) for fetching each stored instruction in turn and for analysing each instruction to determine whether an instruction corresponds either to a fixed and predefined operation or to a user defined operation;
means (151) for generating an address corresponding to the location of a subroutine if an instruction corresponds to a user defined operation,
wherein, in the event that an instruction corresponds to a fixed and predefined operation, the instruction is passed to the central processing unit for execution and, in the event that an instruction corresponds to a user defined operation, a subroutine corresponding to the instruction is called using the generated address.

2. A microprocessor system according to claim 1, wherein instructions corresponding to fixed and predefined operations are distinguished from instructions corresponding to user defined operations by a bit in a predefined bit position (150) of the instruction code, and the means (100) for analysing each stored instruction is arranged to check for the presence of a bit in that bit position.

3. A microprocessor system according to claim 1 or 2, wherein the microprocessor system comprises a data memory (114) arranged in use to store code defining said subroutines.

4. A microprocessor system according to claim 2 or to claim 3 when appended to claim 2, wherein said distinguishing bit is the most significant bit of the instruction code, and the address generating means (151) is arranged to shift the code to the left by one or more bits.

5. A microprocessor system according to claim 4 and comprising a program counter register (105) which is arranged to load the bit shifted instruction.

6. A microprocessor system according to claim 3, wherein the instruction memory (100) is arranged to hold 8-bit wide instructions, whilst the data memory (114) is arranged to hold 32-bit data values.

7. A microprocessor system according to any one of the preceding claims and comprising a hardware stack (104) arranged in use to store a return address when a subroutine is entered, the return address pointing to the next instruction in the instruction memory (100) when execution of the subroutine is completed.

8. A microprocessor system according to claim 7, wherein the central processing unit, instruction memory (100), data memory (114), hardware stack (104), and program counter (105) are all coupled to a common bus (115).

9. A microprocessor system according to claim 8, wherein the central processing unit, instruction memory (100), data memory (114), hardware stack (104), program counter (105), and common bus (115) are integrated onto a single chip.

10. A microprocessor system according to any one of the preceding claims, wherein the central processing unit contains an arithmetic logic unit (103) and a data stack (108, 300), and the top two elements of the data stack are connected to the inputs of the arithmetic logic unit (103) and the output of the arithmetic logic unit (103) is connected to an internal data bus.

11. A microprocessor system according to claim 10, wherein the top three elements of the data stack (300) contain special-purpose circuits, which enable the execution of seven primitive stack operations directly in hardware.

12. A microprocessor system according to any one of the preceding claims and comprising means (201) for recognising a "fast return" instruction "folded" with a regular instruction, by utilising circuitry which decodes the "fast call" bit in an 8-bit bytecode and another dedicated bit or bits in the 8-bit bytecode.

13. A microprocessor system according to claim 12, wherein said other dedicated bit is the second most significant bit in the 8-bit bytecode.

14. A microprocessor system according to any one of the preceding claims, wherein said Virtual Machine bytecodes are Java bytecodes.

## Patentansprüche

1. Mikroprozessorsystem zur Ausführung von virtuellen Maschinen-Bytecodes, die in entsprechende 8-Bit-Mikroprozessoranweisungen übersetzt worden sind, die entweder einer festen und vorher definierten Operation oder einer anwenderdefinierten Operation entsprechen, wobei das System umfaßt:
eine zentrale Verarbeitungseinheit;
einen Anweisungsspeicher (100) zum Speichern der Folge von 8-Bit-Mikroprozessoranweisungen;
eine Einrichtung (101) zum aufeinanderfolgenden Holen jeder gespeicherten Anweisung und zum Analysieren jeder Anweisung, um zu bestimmen, ob eine Anweisung einer festen und vorher definierten Operation oder einer anwenderdefinierten Operation entspricht;
eine Einrichtung (151) zum Erzeugen einer Adresse, die dem Speicherplatz einer Subroutine entspricht, wenn eine Anweisung einer anwenderdefinierten Operation entspricht,
wobei im Falle, daß eine Anweisung einer festen und vorher definierten Operation entspricht, die Anweisung an die zentrale Verarbeitungseinheit zur Ausführung übergeben wird, und im Falle, daß eine Anweisung einer anwenderdefinierten Operation entspricht, eine Subroutine, die der Anweisung entspricht, unter Verwendung der erzeugten Adresse aufgerufen wird.

2. Mikroprozessorsystem nach Anspruch 1, wobei Anweisungen, die festen und vorher definierten Operationen entsprechen, sich von Anweisungen, - die anwenderdefinierten Operationen entsprechen, um ein Bit in einer vorher definierten Bitposition (150) des Anweisungscodes unterscheiden, und die Einrichtung (100) zum Analysieren jeder gespeicherten Anweisung dafür eingerichtet ist, auf das Vorhandensein eines Bits in dieser Bitposition zu prüfen.

3. Mikroprozessorsystem nach Anspruch 1 oder 2, wobei das Mikroprozessorsystem einen Datenspeicher (114) umfaßt, der bei Verwendung dafür eingerichtet ist, ein Code zu speichern, der diese Subroutinen definiert.

4. Mikroprozessorsystem nach Anspruch 2 oder 3 als Anhang zu Anspruch 2, wobei das Unterscheidungsbit das höchstwertige Bit des Anweisungscodes ist und die Adreßerzeugungseinrichtung (151) dafür eingerichtet ist, den Code um ein Bit oder mehr nach links zu verschieben.

5. Mikroprozessorsystem nach Anspruch 4 und mit einem Programmzählerregister (105), das dafür eingerichtet ist, die bitverschobene Anweisung zu laden.

6. Mikroprozessorsystem nach Anspruch 3, wobei der Anweisungsspeicher (100) dafür eingerichtet ist, 8 Bit breite Anweisungen zu halten, während der Datenspeicher (114) dafür eingerichtet ist, 32-Bit-Datenwerte zu halten.

7. Mikroprozessorsystem nach einem der vorhergehenden Ansprüche und mit einem Hardware-Stapelspeicher (104), der bei Verwendung dafür eingerichtet ist, eine Rücksprungadresse zu speichern, wenn eine Subroutine eingegeben wird, wobei die Rücksprungadresse auf die nächste Anweisung im Anweisungsspeicher (100) zeigt, wenn die Anweisung der Subroutine beendet ist.

8. Mikroprozessorsystem nach Anspruch 7, wobei die zentrale Verarbeitungseinheit, der Anweisungsspeicher (100), der Datenspeicher (114), der Hardware-Stapelspeicher (104) und der Programmzähler (105) alle mit einem gemeinsamen Bus (115) gekoppelt sind.

9. Mikroprozessorsystem nach Anspruch 8, wobei die zentrale Verarbeitungseinheit, der Anweisungsspeicher (100), der Datenspeicher (114), der Hardware-Stapelspeicher (104), der Programmzähler (105) und der gemeinsame Bus (115) auf einem einzigen Chip integriert sind.

10. Mikroprozessorsystem nach einem der vorhergehenden Ansprüche, wobei die zentrale Verarbeitungseinheit eine arithmetisch-logische Einheit (103) und einen Daten-Stapelspeicher (108, 300) enthält und die oberen beiden Elemente des Daten-Stapelspeichers mit den Eingängen der arithmetisch-logischen Einheit (103) verbunden sind und der Ausgang der arithmetisch-logischen Einheit (103) mit einem internen Datenbus verbunden ist.

11. Mikroprozessorsystern nach Anspruch 10, wobei die oberen drei Elemente des Daten-Stapelspeichers (300) spezielle Schaltungen enthalten, die die Ausführung von sieben einfachen Stapelspeicheroperationen direkt in der Hardware ermöglichen.

12. Mikroprozessorsystem nach einem der vorhergehenden Ansprüche und mit einer Einrichtung (201) zum Erkennen einer "Schnellrücksprung"-Anweisung, die mit einer regulären Anweisung "gefaltet" ist, indem eine Schaltungsanordnung verwendet wird, die das "Schnellaufruf"-Bit in einem 8-Bit-Bytecode und ein weiteres zweckgebundenes Bit oder Bits in dem 8-Bit-Bytecode decodiert.

13. Mikroprozessorsystem nach Anspruch 12, wobei dieses weitere zweckgebundene Bit das zweithöchstwertige Bit in dem 8-Bit-Bytecode ist.

14. Mikroprozessorsystem nach einem der vorhergehenden Ansprüche, wobei die virtuellen Maschinen-Bytecodes Java-Bytecodes sind.

## Revendications

1. Un système de microprocesseur pour exécuter des pseudo-codes de Machine Virtuelle qui ont été traduits en instructions de microprocesseur à 8 bits respectives qui correspondent soit à une opération fixée et prédéfinie, soit à une opération définie par l'utilisateur, le système comprenant:
une unité centrale de traitement;
une mémoire d'instructions (100) pour stocker la séquence d'instructions de microprocesseur à 8 bits;
un moyen (101) pour prélever tour à tour chaque instruction stockée et pour analyser chaque instruction pour déterminer si une instruction correspond à une opération fixée et prédéfinie ou à une opération définie par l'utilisateur;
un moyen (151) pour générer une adresse correspondant à l'emplacement d'un sous-programme si une instruction correspond à une opération définie par l'utilisateur,
dans lequel, dans le cas où une instruction correspond à une opération fixée et prédéfinie, l'instruction est transmise à l'unité centrale de traitement pour l'exécution, et dans le cas où une instruction correspond à une opération définie par l'utilisateur, un sous-programme correspondant à l'instruction est appelé en utilisant l'adresse générée.

2. Un système de microprocesseur selon la revendication 1, dans lequel des instructions correspondant à des opérations fixées et prédéfinies sont distinguées d'instructions correspondant à des opérations définies par l'utilisateur, par un bit dans une position de bit prédéfinie (150) du code d'instruction, et le moyen (100) pour analyser chaque instruction stockée est adapté pour contrôler la présence d'un bit dans cette position de bit.

3. Un système de microprocesseur selon la revendication 1 ou 2, dans lequel le système de microprocesseur comprend une mémoire de données (114) qui, pendant l'utilisation, est adaptée pour stocker un code définissant les sous-programmes.

4. Un système de microprocesseur selon la revendication 2 ou la revendication 3 lorsqu'elle est rattachée à la revendication 2, dans lequel le bit de distinction est le bit le plus significatif du code d'instruction, et le moyen de génération d'adresse (151) est adapté pour décaler le code d'un ou plusieurs bits vers la gauche.

5. Un système de microprocesseur selon la revendication 4 et comprenant un registre de compteur d'instructions (105) qui est adapté pour charger l'instruction ayant subi le décalage de bits.

6. Un système de microprocesseur selon la revendication 3, dans lequel la mémoire d'instructions (100) est adaptée pour contenir des instructions d'une largeur de 8 bits, tandis que la mémoire de données (114) est adaptée pour contenir des valeurs de données à 32 bits.

7. Un système de microprocesseur selon l'une quelconque des revendications précédentes et comprenant une pile de matériel (104) qui, pendant l'utilisation, est adaptée pour stocker une adresse de retour au moment de l'entrée dans un sous-programme, l'adresse de retour désignant l'instruction suivante dans la mémoire d'instructions (100) lorsque l'exécution du sous-programme est terminée.

8. Un système de microprocesseur selon la revendication 7, dans lequel l'unité centrale de traitement, la mémoire d'instructions (100), la mémoire de données (114), la pile de matériel (104) et le compteur d'instructions (105) sont tous couplés à un bus commun (115).

9. Un système de microprocesseur selon la revendication 8, dans lequel l'unité centrale de traitement, la mémoire d'instructions (100), la mémoire de données (114), la pile de matériel (104), le compteur d'instructions (105) et le bus commun (115) sont intégrés sur une seule puce.

10. Un système de microprocesseur selon l'une quelconque des revendications précédentes, dans lequel l'unité centrale de traitement contient une unité arithmétique et logique (103) et une pile de données (108, 300), et les deux éléments supérieurs de la pile de données sont connectés aux entrées de l'unité arithmétique et logique (103), et la sortie de l'unité arithmétique et logique (103) est connectée à un bus de données interne.

11. Un système de microprocesseur selon la revendication 10, dans lequel les trois éléments supérieurs de la pile de données (300) contiennent des circuits spécialisés, qui permettent l'exécution de sept opérations de pile primitives directement par matériel.

12. Un système de microprocesseur selon l'une quelconque des revendications précédentes et comprenant des moyens (201) pour reconnaître une instruction de "retour rapide" qui est "emballée" avec une instruction normale, par l'utilisation d'un circuit qui décode le bit "d'appel rapide" dans un pseudo-code à 8 bits et un ou plusieurs autres bits spécialisés dans le pseudo-code à 8 bits.

13. Un système de microprocesseur selon la revendication 12, dans lequel l'autre bit spécialisé est le second bit à partir du bit le plus significatif dans le pseudo-code à 8 bits.

14. Un système de microprocesseur selon l'une quelconque des revendications précédentes, dans lequel les pseudo-codes de Machine Virtuelle sont des pseudo-codes Java.
